Europäisches Patentamt

European Patent Office

Office européen des brevets

(11) Publication number: 0 366 197 A1

(12) EUROPEAN PATENT APPLICATION

(21) Application number: 89202671.7

(22) Date of filing: 23.10.89

(51) Int. Cl.5: C03B 8/02 , C01B 33/158

(30) Priority: 27.10.88 NL 8802643

(43) Date of publication of application:
02.05.90 Bulletin 90/18

(84) Designated Contracting States:
DE FR GB

(71) Applicant: N.V. Philips' Gloeilampenfabrieken
Groenewoudseweg 1
NL-5621 BA Eindhoven(NL)

(72) Inventor: Boonstra, Alexander Henrik
c/o INT. OCTROOIBUREAU B.V. Prof.
Holstlaan 6
NL-5656 AA Eindhoven(NL)
Inventor: van Lierop, Joseph Gijsbertus
c/o INT. OCTROOIBUREAU B.V. Prof.
Holstlaan 6
NL-5656 AA Eindhoven(NL)
Inventor: Meerman, Wilhelmus Cornelis
Petrus Maria
c/o INT. OCTROOIBUREAU B.V. Prof.
Holstlaan 6
NL-5656 AA Eindhoven(NL)

(74) Representative: Pennings, Johannes et al
Internationaal Octrooibureau B.V. Prof.
Holstlaan 6
NL-5656 AA Eindhoven(NL)

(54) Method of manufacturing a monolithic silica aerogel.

(57) A mechanically strong monolithic silica aerogel is manufactured by adding an organic solvent and water to a hydrolysable silicon compound while forming a gel which gel is dried in an autoclave at a temperature which is at least 400°C. The silica aerogel has a density of more than 0.35 g/cm$^3$ and a specific area which is smaller than 200 m 2 /g. The aerogel may be used for the manufacture of very pure quartz glass, for example, in the form of flat sheets.

Xerox Copy Centre

## Method of manufacturing a monolithic silica aerogel.

The invention relates to a method of manufacturing a monolithic silica aerogel in which an organic solvent and water are added to a hydrolysable silicon compound while forming a gel, which gel is dried in an autoclave.

The silica aerogel manufactured according to the invention may be used for the manufacture of very pure quartz glass, for example, for use in optical fibres for telecommunication purposes or for lamp envelopes. The method is particularly suitable for manufacturing flat sheets of quartz glass which may be used as a substrate material for the manufacture of masks in semiconductor technology and in planar optical systems.

A method of manufacturing a silica aerogel as described in the opening paragraph is disclosed in United States Patent Specification US 4,332,956. The drying of the aerogel takes place under hypercritical conditions at a temperature between 260° and 290°C to prevent crack formation during drying. After drying the aerogel is densified to quartz glass by means of sintering at a temperature between 1120° and 1300°C. The expression hypercritical conditions is used to indicate that temperature and pressure are chosen above the critical point of the solvent to be removed, usually an organic solvent, for example ethanol.

Such a method is described in European Patent Application EP 18955 in which drying under hypercritical conditions is carried out by carefully heating up to 275°C. The quartz glass formed is subjected to an after-treatment in an oxidising atmosphere at a temperature from 500° to 750°C.

A method of manufacturing a silica aerogel is described in European Patent Application EP 184255 in which drying in hypercritical conditions is carried out in an autoclave at a temperature between 275° and 325°C. This temperature range is limited on the lower side by the necessity of drying under hypercritical conditions and on the upper side by the desire to prevent the occurrence of carbonisation of organic molecules after which carbon might remain in the aerogel as an impurity.

French Patent Specification FR 1575283 discloses a method of drying a metal oxide gel under hypercritical conditions and temperatures up to 300°C. An inert gas is used to reduce the drying temperature.

Silica aerogels manufactured by means of a prior art method may be manufactured as a monolith and, although they are crackfree and bubblefree for the greater part, they are mechanically rather weak and show a strong decrease in volume upon sintering to quartz glass. The density of such an aerogel generally is from 0.15 to 0.20 g/cm³, the specific area is from 200 to 1300 m²/g.

During the sintering to quartz glass, burning or decomposition of chemisorbed material occurs. The possible detrimental results thereof can be prevented by sintering an aerogel with a comparative small specific area, for example, in the order of magnitude of 100 m²/g, or by a low density of chemisorbed material on the surface of the primary particles of the aerogel. On the other hand it is desirable for the primary particles to be small (and hence to show a large specific area), so that purification of the material can take place by means of diffusion of impurities to the surface of the particles, where the impurities can be removed by reaction with a purification gas. Moreover, for purifying by means of a gas, for example, chlorine or thionyl chloride, it is necessary for the aerogel to have an open structure.

When the specific area of the aerogel is less than 500 m²/g it is possible to reduce the specific area to approximately 100 m²/g without crack formation by means of presintering after which purification may be carried out by rinsing with a reactive gas. Upon heating in air, however, hardly any change occurs in the specific area at temperatures up to 1000°C.

It is one of the objects of the invention to provide a strong monolithic aerogel which can be sintered to a very pure quartz glass. The invention endeavours to achieve this without the necessity of presintering. The silica aerogel should have a specific area which is smaller than 200 m²/g, preferably between 50 and 150 m²/g in which the surface has a low density of hydroxyl groups and alkoxy groups. Moreover it is desirable for the aerogel to have a density of more than 0.35 g/cm³ to produce a better controllability during sintering.

According to the invention this object is achieved by means of a method as described in the opening paragraph in which the gel is dried at a temperature of at least 400°C, preferably between 400 and 500°C.

As a result of the temperature being higher than usual, alkoxy groups are removed from the surface of the primary particles as a result of which particle growth is promoted. The use of such high temperatures during drying is not obvious: it is conventional to dry above the critical temperature but not to proceed far above that. There are a number of disadvantages involved in the use of higher temperatures. There is a higher energy consumption and because, due to the higher temperature, the pressure also becomes much higher, the cost of the necessary apparatus increases considerably. At high temperatures carbon may be formed which can remain in the aerogel as an impurity. An extra loss of time also results from the use of higher temperatures, if it is desired to heat and cool carefully.

The formation of carbon in the aerogel can be prevented by the presence of a quantity of oxygen in the autoclave during drying. In order to avoid the danger of the formation of an explosive mixture of alcohol and oxygen it is also possible to remove carbon-containing molecules and molecule groups by hydrolysis, for which purpose an extra quantity of water may be present in the autoclave during drying. Hydrolysis occurs already at comparatively low temperatures and has a useful speed, for example, at 200°C.

The density of occupation of the surface with hydroxyl groups and/or organic groups can be reduced by reducing the pressure after drying by means of evacuation down to 1 MPa, before the autoclave is cooled.

As a hydrolysable silicon compound may be used, for example tetraethoxysilane $Si(OC_2H_5)_4$, having a density of 0.92 g/cm$^3$ and a silicon oxide content of 29 % by weight.

A higher density of the formed aerogel can be obtained by using a polyalkyl silicate as a hydrolysable silicon compound in which the alkyl groups in the polyalkyl silicate comprise at most 4 carbon atoms. The polyalkyl silicate preferably has the following composition:
$R-[OSi(OR)_2]_n-OR$
wherein R has been chosen from methyl groups and ethyl groups and in which n is between 1 and 10 with an average value of 5 to 6. Such a polyethylsilicate has a density of 1.05 g/cm$^3$ and a silicon oxide content of 42 % by weight.

The invention will now be described in greater detail with reference to a number of specific examples and a number of comparative examples.

Comparative example A, not according to the invention.

A solution was manufactured from 1 mol tetraethoxysilane, 2 mol ethanol and 2 mol water at a temperature of 50°C. 3/16 parts of the water were added in the form of a 0.01 N HCl solution and the remaining part was added after 30 minutes in the form of a 0.06 N NH₄OH solution.

After a gel had formed in the solution, it was dried by heating in an autoclave at a heating rate of 50°C per hour. The drying temperature was 300°C, the pre-pressure in the autoclave was provided by means of nitrogen and was 8 MPa. After reaching the maximum temperature the volatile components were allowed to escape, in which the pressure was reduced to 0.1 MPa, after which the autoclave was cooled.

The produced aerogel had a specific area of 530 m$^2$/g. The quantity of chemisorbed material was established by means of firing in air to 400°C. A loss of weight of 12.5 occurred, in particular as a result of the burning of chemisorbed ethanol.

Example 1, according to the invention.

The method according to comparative example A was used in which, however, the drying temperature was 450°C.

The produced aerogel had a specific area of 130 m$^2$/g. The loss of weight upon firing in air up to 400°C was 3.5 %.

Example 2, according to the invention.

The method of example 1 was used in which extra water was added in the autoclave.

The produced aerogel had a specific area of 80 m$^2$/g. The loss of weight upon firing in air up to 400°C was 0.9 %.

Comparative example B, not according to the invention.

A solution was manufacture of 1 mol tetraethoxysilane, 2 mol ethanol and 2 mol water at a temperature of 50°C. The water was added in the form of a 0.01 N HCl solution. After 30 minutes the solution was rendered basic by means of ammoniacal ethanol with an excess base with respect to the acid of 50 %.

After a gel had formed in the solution, it was dried by heating in an autoclave at a heating rate of 50°C per hour. The drying temperature was 300°C, the prepressure in the autoclave was provided by means of nitrogen and was 8 MPa. After reaching the maximum temperature the volatile components were allowed to escape while reducing the pressure to 0.1 MPa, and the autoclave was cooled. The produced aerogel had a specific area of 930 m$^2$/g. The loss of weight upon firing in air up to 400°C was 20.5 %.

Example 3, according to the invention.

The method according to comparative example B was used in which, however, the drying temperature was 450°C.

The produced aerogel had a specific area of 170 m$^2$/g. The loss of weight upon firing in air up to 400°C was 2.0 %.

Example 4, according to the invention.

The method of example 3 was used in which extra water was added in the autoclave.

The produced aerogel had a specific area of 110 m²/g. The loss of weight upon firing in air up to 400°C was 0.4 %.

Comparative example C, not according to the invention.

A solution was manufactured from 1 mol of polyethylsilicate (average molecular weight 878) 4 mol ethanol and 8 mol water at a temperature of 50°C. 1.6 mol water were added in the form of 0.01 N HCl solution and the remaining part was added after 30 minutes in the form of a 0.2 N NH₄OH solution.

After a gel had formed in the solution it was dried by heating in an autoclave at a heating rate of 50°C per hour. The drying temperature was 300°C, the prepressure in the autoclave was provided by means of nitrogen and was 8 MPa. After reaching the maximum temperature, the volatile components were allowed to escape while reducing the pressure to 0.1 MPa and the autoclave was cooled.

The produced aerogel had a density of 0.4 g/cm² and a specific area of 800 m²/g. The loss of weight upon firing in air up to 400°C was 13 %.

Example 5, according to the invention.

The method according to comparative example C was used in which, however, the drying temperature was 400°C.

The produced aerogel had a specific area of 60 m²/g. The loss of weight upon firing in air up to 400°C was less than 2 %.

The aerogels manufactured by means of the method according to the invention are mechanically strong and have a comparatively high density. Since little chemisorbed material is present in the aerogels the sintering becomes easier and crack formation is prevented.

The aerogels, without having been subjected to a presintering process, can be cleaned in known manner by rinsing with a reactive gas at elevated temperature, for example with chlorine gas above 600°C. The quartz glass thus produced is very pure and comprises, for example, less than 200 ppb of hydroxyl groups and less than 5 ppb of transition metals, for example, iron and nickel.

**Claims**

1. A method of manufacturing a monolithic silica aerogel in which an organic solvent and water are added to a hydrolysable silicon compound while forming a gel, which gel is dried in an autoclave, characterized in that the gel is dried at a temperature of at least 400°C.

2. A method as claimed in Claim 1, characterized in that the gel is dried at a temperature between 400° and 500°C.

3. A method as claimed in Claim 1 or 2, characterized in that a quantity of oxygen is present in the autoclave during drying.

4. A method as claimed in Claim 1 or 2, characterized in that an extra quantity of water is present in the autoclave during drying.

5. A method as claimed in any of the Claims 1 to 4, characterized in that after drying the pressure is reduced by means of evacuation to less than 1 Pa after which the autoclave is cooled.

6. A method as claimed in any of the Claims 1 to 5, characterized in that the hydrolysable sintering compound is a polyalkyl silicate, the alkyl groups of which comprise at most four carbon atoms.

7. A method as claimed in Claim 6, characterized in that the polyalkyl silicate has the following composition:

R-[OSi(OR)₂]ₙ-OR

wherein R has been selected from methyl groups and ethyl groups and wherein n is between 1 and 10 with an average value of 5 to 6.

8. The use of a monolithic silica aerogel manufactured by means of the method as claimed in any of the Claims 1 to 7 for manufacturing flat sheets of quartz glass.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A- 855 502 (MONSANTO CHEMICAL CO.) * Page 2, lines 82-91; page 6, lines 16-47 * | 1,2 | C 03 B 8/02 C 01 B 33/158 |
| A | FR-A-2 096 780 (CORNING GLASS WORKS) * Page 2, lines 17-36 * | 1,2 | |
| A | CHEMICAL ABSTRACTS, vol. 96, no. 20, May 1982, page 312, abstract no. 167428q, Columbus, Ohio, US; & JP-A-81 155 038 (HITACHI CABLE LTD) 01-12-1981 * Abstract * | 1,2 | |
| A | EP-A-0 261 593 (LION CORP.) * Claim 1 * | 6,7 | |

TECHNICAL FIELDS
SEARCHED (Int. Cl.5)

C 03 C
C 03 B
C 01 B

The present search report has been drawn up for all claims

| Place of search | Date of completion of the search | Examiner |
|---|---|---|
| THE HAGUE | 14-11-1989 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)